# EUROPÄISCHE PATENTSCHRIFT

(11) **EP 3 108 147 B1**
(45) Veröffentlichungstag und Bekanntmachung des Hinweises auf die Patenterteilung: **06.05.2020**
(21) Anmeldenummer: 15706212.6
(22) Anmeldetag: 19.02.2015
(51) Int. Cl.: F16B 13/14, B05C 17/005

(54) **VORRICHTUNG ZUM EINBRINGEN EINER DÜBELMASSE IN EINE ÖFFNUNG**
DEVICE FOR INSERTING A PLUGGING COMPOUND INTO AN OPENING
DISPOSITIF SERVANT À L'INTRODUCTION D'UNE MATIÈRE DE FIXATION DANS UNE OUVERTURE

(30) Priorität: 20.02.2014 DE 102014203078
(43) Veröffentlichungstag der Anmeldung: 28.12.2016
(73) Patentinhaber: Henkel AG & Co. KGaA, 40589 Düsseldorf (DE)
(72) Erfinder: WOLF, Karsten, 40589 Düsseldorf (DE); RUTHE-STEINSIEK, Kai, 40223 Düsseldorf (DE)
(86) Internationale Anmeldenummer: PCT/EP2015/053490
(87) Internationale Veröffentlichungsnummer: WO 2015/124667

(56) Entgegenhaltungen:
- EP-A2- 1 308 137
- EP-A2- 1 378 332
- DE-A1- 3 312 952
- GB-A- 192 957
- GB-A- 2 127 283
- US-A- 5 046 877
- US-A- 5 566 866

## Beschreibung

Die Erfindung betrifft eine Vorrichtung zum Einbringen einer Dübelmasse in eine Öffnung, beispielsweise ein Bohrloch oder Stemmloch.

Im Stand der Technik ist eine Vielzahl von Dübeltechniken bekannt. Beispielsweise kommen im Baubereich Dübel, insbesondere Spreizdübel zum Einsatz. Selbige werden meist in ein Bohrloch eingesetzt. Beim Einbringen eines Befestigungselementes, wie beispielsweise einer Schraube oder eines Nagels in den Dübel, wird das Material des Dübels verformt und nach außen verdrängt. Das Verbindungsmittel spreizt demnach den Dübel auseinander, wobei ein Form- und/oder Kraftschluss mit der Wandung des Bohrloches entsteht. Die Verankerungskraft der bekannten Spreizdübel hängt dabei auch besonders von der Eigenfestigkeit des Baustoffes ab. So kann sich insbesondere bei der Verwendung von Leichtbau- und Hohlblocksteinen, Gasbeton oder ähnlichen Werkstoffen der Einsatz dergleicher derartiger Dübel als schwierig erweisen.

Ferner gibt es chemische Dübelmassen aus mehreren Komponenten, die beispielsweise mittels eines Druckbehälters direkt in das Bohrloch eingebracht werden, sich dort vermischen, aufschäumen und aushärten. Beispielsweise zeigt die GB2207726(A) eine solche Lösung. Einen ähnlichen Ansatz verfolgt die DE3248143A1 mit einem Dübel zur formschlüssigen Verankerung in Hohlräumen mit einem saugfähigen Dübelkörper, der mittels aushärtender Masse verfestigbar ist, wobei der Dübel beispielsweise vor dem Setzen in einem Bohrloch in der aushärtenden Masse getränkt wird, unmittelbar im Anschluss in das Bohrloch eingebracht wird, woraufhin die Masse unter Verschäumung aushärtet und eine formschlüssige Verankerung ermöglicht. Die DE20201686U1 wiederum offenbart einen Kunststoffdübel, der einen Behälter mit einem darin befindlichen Polyurethansystem enthält. Nach dem Einbringen des Kunststoffdübels wird der Behälter beispielsweise mittels einer in den Dübel eingebrachten Schraube zerstört und so das Polyurethansystem freigesetzt, so dass das System mit der Luftfeuchtigkeit der Umgebung unter Verschäumung zu einem Polyurethan reagiert. Bei all diesen Lösungen ist beispielsweise das Handling insbesondere für Laien schwierig. Beispielsweise kann zuviel Dübelmasse zum Einsatz kommen, so dass der Einsatzbereich um das Bohrloch verschmutzt wird. Bei dem Einsatz zu geringer Mengen ist die Qualität der Befestigung oft zweifelhaft.

Das Dokument EP 1 378 332 A2 zeigt eine Vorrichtung zum Einbringen von Material mit einer Abgrenzung am vorderen Ende und einem Kolben zum Ausbringen der Füllmasse.

Seit langer Zeit ist auch der Einsatz von knetbaren Massen bekannt, die in das Bohrloch eingebracht werden. So offenbart beispielsweise die US2,110,053 ein Verfahren zum Sichern eines Befestigungsmittels in einem Bohrloch, bei dem eine knetbare Masse in ein Bohrloch eingebracht und mittels eines Stempels nachgepresst wird. Im Anschluss wird eine Öffnung eingestochen, in welche beispielsweise nach der Aushärtung der Masse eine Schraube eingedreht werden kann. Eine ähnliche Lösung wird auch in der US2,291,929A offenbart. Schwierig bei einer solchen Lösung ist das sichere Einbringen der knetbaren Masse in das Bohrloch.

Aufgabe der Erfindung ist daher der Einsatz einer verbesserten Vorrichtung zum Einbringen einer Dübelmasse in ein Bohrloch.

Diese Aufgabe wird durch die Merkmale der unabhängigen Ansprüche gelöst.

Vorteilhafte Ausgestaltungen sind mit den Unteransprüchen angegeben Grundgedanke der Erfindung ist der Einsatz einer Vorrichtung zum Einbringen einer Dübelmasse in ein Bohrloch oder eine andere Öffnung, wobei die Vorrichtung eine Hülse mit einem Hohlraum zur Aufnahme der Dübelmasse aufweist, wobei die Hülse an der einen Seite eine mit dem Hohlraum korrespondierende Ausgabeöffnung zur Ausgabe der Dübelmasse sowie einen vorzugsweise auf Höhe der Ausgabeöffnung seitlich von der Hülse vorstehenden Auflageabschnitt zur Bereitstellung einer Auflagemöglichkeit für die Hülse beim Einbringen der Dübelmasse beispielsweise auf einem Substrat wie beispielsweise einem das Bohrloch aufweisenden Mauerwerk aufweist, wobei an der gegenüberliegenden Seite der Hülse eine obere Öffnung vorgesehen ist, durch die ein Kolben mit einem Vorschubteller in den Hohlraum hineinragt, wobei der Kolben relativ zur Hülse derart bewegbar ist, dass der Vorschubteller im Hohlraum versetzbar ist, um die Dübelmasse beispielsweise aufnehmen und abgeben zu können.

Durch eine derartige Vorrichtung können viele Vorteile erreicht werden. Der Anwender kann die Dübelmasse präzise dosieren, ohne beim Einbringen der Dübelmasse in das Bohrloch direkt mit der Dübelmasse in Kontakt zu treten. Zudem kann durch den Einsatz des Auflageabschnittes eine Lagerfläche für die Vorrichtung bereitgestellt werden, mittels derer der Anwender die Vorrichtung beim Einbringen der Dübelmasse in ein Bohrloch an dem Substrat, beispielsweise dem Mauerwerk rund um das Bohrloch abstützen kann. Vorzugsweise ist die Hülse aus einem Kunststoffmaterial, insbesondere aus einem Kunststoffmaterial wie beispielsweise einem Polyethylen oder einem Polypropylen gefertigt, wobei der Auflageabschnitt oder die Auflageabschnitte vorzugsweise einstückig mit der Hülse verbunden sind. So kann die Hülse beispielsweise durch einen Spritzvorgang hergestellt werden, wobei der Auflageabschnitt oder die Auflageabschnitte direkt an die Hülse angespritzt werden. In einer vorteilhaften Ausführungsform ist der Kolben mit dem vorzugsweise mit dem einstückig mit dem Kolben verbundenen Vorschubteller ebenfalls aus einem Kunststoffmaterial gefertigt. Dabei kann der Kolben in einem Spritzgussvorgang an die Hülse angespritzt werden, um Herstellungskosten einsparen zu können. Hierbei kann eine beispielsweise vom Anwender vor der Anwendung zerstörbare Verbindungsnaht beispielsweise zwischen dem die obere Öffnung begrenzenden Rand und dem äußeren Rand des Vorschubtellers vorgesehen werden.

Als Dübelmasse können insbesondere im Stand der Technik bekannte Dübelmassen wie beispielsweise zweikomponentige Knetmassen zum Einsatz kommen. Diese Knetmassen sind auch bekannt als Knetdübel, Dübelknete, Dübelmasse oder Power Knete. Derartige Knetmassen sind meist auf Epoxidharz-Basis hergestellt, wobei die beiden Komponenten in der Regel vom Anwender unmittelbar vor der Applikation miteinander beispielsweise händisch durch Kneten vermischt werden.

Nach dem Vermischen kann der Anwender die Knetmasse in den Hohlraum der Hülse einfüllen oder die Knetmasse mit der Vorrichtung aufnehmen und im Anschluss in ein Bohrloch einbringen. Selbstverständlich sind auch andere Dübelmassen denkbar. Beispielsweise können auch Dübelmassen zum Einsatz kommen, die leicht expansive Eigenschaften haben, und im Bohrloch expandieren. Vorzugsweise kommen pastöse bis stark pastöse Dübelmassen zum Einsatz, die beispielsweise schwerlich mittels Kartuschen und daran befestigten Mischvorrichtungen ausgebracht werden können.

Ein weiterer Vorteil ist der Einsatz eines Hohlraums, der zumindest im Bereich, in dem der Vorschubteller im Hohlraum versetzbar ist, zylindrisch gestaltet ist. Vorzugsweise kommt eine Hülse mit im Wesentlichen hohlzylindrischer Grundform zum Einsatz, so dass der Hohlraum im Wesentlichen über seine voll Länge zylindrisch gestaltet ist. Selbstverständlich ist es denkbar, dass die Hülse bei der im Wesentlichen hohlzylindrischen Grundform Anbauteile, wie beispielsweise oberhalb beschriebene Auflageabschnitte oder auch Griff- oder Führungshilfen oder ähnliches aufweist. Zudem ist es denkbar, dass der im Wesentlichen zylindrische Hohlraum an einigen Stellen beispielsweise durch den Bewegungsweg des Vorschubtellers einschränkende und in den Hohlraum hineinragende Vorsprünge, Kragen Rastpunkte oder ähnliche Elemente eine bereichsweise abweichende Querschnittsfläche aufweisen kann.

In einer vorteilhaften Weiterbildung fluchtet die Ausgabeöffnung mit einer den Hohlraum begrenzenden Innenwand. Demnach ist es vor Vorteil, eine Ausgabeöffnung vorzusehen, die den gleichen Querschnitt wie der unmittelbar an die Ausgabeöffnung angrenzende Bereich des Hohlraums aufweist. Vorzugsweise kommt hier ein zylindrischer Hohlraum zum Einsatz, zumindest im Bereich in dem der Vorschubteller im Hohlraum versetzbar ist, wobei die Ausgabeöffnung vorzugsweise denselben Querschnitt wie der Hohlraum aufweist. Somit wird in dieser vorteilhaften Weiterbildung auf eine Querschnittsreduzierung oder Einengung im Bereich der Ausgabeöffnung verzichtet, so dass die insbesondere pastöse bis stark pastöse Dübelmasse leichter ausgegeben werden kann.

Ein weiterer Vorteil ist eine Gestaltung der Vorrichtung derart, dass der Kolben relativ zur Hülse beidseitig bewegbar ist, insbesondere um die Dübelmasse in den Hohlraum aufnehmen und zum Einbringen in ein Bohrloch abgeben zu können. Ein weiterer Vorteil ist das kleine Packmaß der Vorrichtung im Falle der Nichtnutzung. Beispielsweise kann im Auslieferungszustand der Kolben derart in Richtung Ausgabeöffnung der Hülse verschoben werden, dass der Vorschubteller sich in der Nähe der Ausgabeöffnung befindet oder unmittelbar an die Ausgabeöffnung grenzt. Somit befindet sich der Kolben zu einem großen Teil innerhalb des Hohlraums der Hülse, so dass die Größe der Vorrichtung und somit die Verpackungsgröße reduziert werden kann.

Erfindungsgemäß ist der Auflageabschnitt mit einer Auflagefläche ausgerüstet, wobei die Auflagefläche und eine Stirnfläche der Hülse, die die Ausgabeöffnung begrenzt, in einer Ebene liegen. Vorzugsweise weist die Ausgabeöffnung einen Öffnungsrand auf, der Teil der Hülse ist und in distale Richtung besagte Stirnfläche aufweist oder in der Stirnfläche mündet.

Dass die Stirnfläche mit der Auflagefläche in einer Ebene liegt oder mündet, kann beispielsweise die Handhabung insofern erleichtern, als dass die Dübelmasse einerseits präzise in ein Bohrloch eingebracht werden kann, wobei eine sichere Abstützung an den das Bohrloch umgebenden Bereichen beispielsweise eines Mauerwerks ermöglicht werden kann. Andererseits ist ein sicheres Entfernen der Vorrichtung nach dem Einbringen möglich, ohne dass die Dübelmasse wieder aus dem Bohrloch herausgezogen wird. Durch die besondere Gestaltung kann die Vorrichtung beispielsweise nach dem Einbringen seitlich versetzt werden oder die Dübelmasse kann durch anderweitige Versetzung beispielsweise von dem Vorschubteller abgeschert werden.

In einer vorteilhaften Weiterbildung weist der Auflageabschnitt die Auflagefläche auf, wobei zwischen der Auflagefläche und der die Öffnung begrenzenden Stirnfläche ein Freiraum vorgesehen ist. Dieser Freiraum kann beispielsweise Material einsparen, so dass die Herstellungskosten reduziert werden können. Ferner kann der Freiraum als Aufnahmemöglichkeit für überschüssige Dübelmasse genutzt werden. Beendet der Anwender beispielsweise seine Arbeit und entfernt er die Vorrichtung von dem mit Dübelmasse versehenen Bohrloch, tut er dies vorzugsweise unter Durchführung einer Abscherbewegung durch die die Entfernung eingeleitet wird. Diese wird vorzugsweise ausgeführt durch eine Initialbewegung in seitliche Richtung, also im Wesentlichen parallel zum Substrat, also beispielsweise einer Außenseite einer Wand, um ein Abscheren der Dübelmasse von dem Vorschubteller zu ermöglichen. Sollte ein Rest an Dübelmasse beispielsweise an der Stirnfläche verbleiben oder von dem Bohrloch herausstehen, kann dieser Rest insbesondere von dem die Auflagefläche begrenzenden Bereich des Auflageabschnittes, wie beispielsweise ein vorstehender Rand, bei besagter Abscherbewegung in den Freiraum transportiert werden, ohne die Umgebung zu verschmutzen. Zudem kann sich der Freiraum als vorteilhaft erweisen, da die Stabilität des Auflageabschnittes durch eine derartige Gestaltung bei geringem Materialaufwand erhöht werden kann.

Ein weiterer Vorteil ist die Anordnung der Auflagefläche an einem umlaufenden Auflagerand sowie die Stirnfläche an dem Öffnungsrand, wobei Auflagerand und Öffnungsrand vorzugsweise derart beabstandet voneinander sind, dass zwischen Auflagefläche und Stirnfläche zumindest bereichsweise ein Freiraum vorgesehen ist. Durch die Verwendung eines umlaufenden Auflagerandes kann eine umlaufende Auflage- oder Lagermöglichkeit der Vorrichtung an allen Seiten der Hülse vorgesehen werden, um eine besonderes einfache Handhabung für den Anwender zu gewährleisten. In einer vorteilhaften Weiterbildung ist der Auflagebereich dabei beispielsweise oval gestaltet, wobei der Auflagerand an der Außenseite des Auflagebereichs, der ovalen Form des Auflagebereichs folgend, verläuft. Ferner können durch Vorsehung eines Freiraums bei der oberhalb beschriebenen bevorzugten Ausführungsform der zumindest bereichsweise beabstandeten Anordnung von Auflagerand und Öffnungsrand, die oberhalb beschriebenen Vorteile wie beispielsweise erhöhte Stabilität des Auflagebereichs und/oder Bereitstellung einer Möglichkeit zur Aufnahme für überschüssige Dübelmasse erreicht werden.

Ein weiterer Vorteil ist die Ausstattung der Auflagefläche mit rutschhemmenden Mitteln, um einen sicheren Halt auf einem Substrat, wie beispielsweise einem Mauerwerk gewährleisten zu können. Dabei sind insbesondere Gummieinsätze oder Rippen denkbar. Auch kann sich der Einsatz einer rauen Oberfläche als zweckmäßig erweisen.

Erfindungsgemäß weist die Hülse ein Rückhaltemittel für den Kolben, vorzugsweise für den Vorschubteller des Kolbens auf, um eine Möglichkeit zur Begrenzung der Relativbewegung von Kolben zur Hülse bereitzustellen. So kann beispielsweise bei dem Einsatz eines Rückhaltemittels in der Nähe der oberen Öffnung vermieden werden, dass der Anwender bei einer Versetzung des Kolben in Richtung der oberen Öffnung den Kolben mit dem Vorschubteller aus der Hülse herauszieht, wodurch beispielsweise in dem Hohlraum befindliche Dübelmasse austreten und das Umfeld oder den Anwender beschmutzen könnte.

Dabei hat es sich als vorteilhaft erwiesen, das Rückhaltemittel als ein von der Innenwand der Hülse vorstehender Vorsprung auszugestalten. Der Vorsprung kann dabei sowohl umlaufend über die gesamte Innenwand der Hülse verlaufen, als auch unterteilt oder nur in einem oder mehreren Abschnitten. Zudem kann der Vorsprung als Übergang zu einem Abschnitt des Hohlraums der Hülse gestaltet sein, in dem der Hohlraum einen geringeren Durchmesser und/oder eine geringere Querschnittsfläche aufweist, als der übrige Hohlraum.

Ein weiterer Vorteil ist eine derartige Gestaltung der Hülse und/oder des Vorschubtellers, das eine der Vorschubteller bei einer Versetzung des Kolbens relativ zur Hülse mit der Innenwand in Kontakt ist. Vorzugsweise kann dabei an der Innenwand anhaftende Dübelmasse von dem Vorschubteller von der Innenwand abgeschabt oder abgeschert werden, um eine Reinigungsmöglichkeit der Innenwand zu gewährleisten, um die Vorrichtung nach dem einbringen der Dübelmasse in ein Bohrloch erneut nutzen zu können. Dabei ist es beispielsweise denkbar, die Hülse aus einem Kunststoffmaterial zu fertigen, wobei der ebenfalls aus einem Kunststoffmaterial gefertigte Vorschubteller einen Querschnitt aufweist, der geringfügig größer ist, als der der Querschnitt des Hohlraums, so dass der Vorschubteller zwar die Hülse im jeweils unmittelbar benachbarten Bereich geringfügig und vorzugsweise reversibel verformt, jedoch ein Eingriff oder ein Kontakt von Vorschubteller und Innenwand der Hülse auch bei Material- und Fertigungstoleranzen gewährleistet werden kann.

In einer vorteilhaften Weiterbildung weist die Hülse Markierungen auf, die die Menge an ausgebrachtem oder auszubringenden Dübelmaterials anzeigen können. In einer Variante oder zusätzlich sind Rastpunkte oder Rastnocken vorgesehen, die eine Mengen oder Tiefenvorgabe anzeigen oder fühlbar machen.

Ein weiterer Grundgedanke der Erfindung ist ein Verfahren zum Einbringen einer Dübelmasse in ein Bohrloch unter Verwendung einer oberhalb beschriebenen Vorrichtung, wobei in einem ersten Schritt die Dübelmasse in den Hohlraum der Hülse eingeführt wird. Bei der Verwendung einer mehrkomponentigen Dübelmasse sind die Komponenten vorzugsweise vor dem Einführen, beispielsweise durch manuelles Kneten durch den Anwender zu vermischen. Das Einführen kann beispielsweise durch manuelles Einschieben oder Eindrücken der Dübelmasse durch die Ausgabeöffnung in den Hohlraum erfolgen, wobei der Kolben mit dem Vorschubteller in diesem Fall vorzugsweise vor dem Einbringen in Richtung oberer Öffnung versetzt worden ist. Eine andere Möglichkeit ist das Einbringen der Dübelmasse durch spritzenähnliches Aufziehen der Dübelmasse durch Versetzten des Kolbens mit dem Vorschubteller von der Seite der Ausgabeöffnung der Hülse in Richtung der oberen Öffnung.

In einem weiteren Schritt wird die Vorrichtung aufweisend die Dübelmasse in dem Hohlraum mit der Auflagefläche auf ein Substrat, wie beispielsweise ein das Bohrloch enthaltendes Mauerwerk derart aufgesetzt, dass die Ausgabeöffnung über dem Bohrloch angeordnet ist und die Auflagefläche vorzugsweise auf einem das Bohrloch benachbarten Bereichs des Substrats. Vorzugsweise kommt eine Vorrichtung zum Einsatz, die an die Größe des Bohrloches angepasst ist. So kommen vorzugsweise Vorrichtungen zum Einsatz, deren Ausgabeöffnung in etwa kleiner oder gleich der Öffnung des Bohrloches ist, um ein einfaches Einbringen der Dübelmasse in das Bohrloch ermöglichen zu können.

In einem weiteren Schritt wird eine Relativbewegung von Kolben zu Hülse zur Versetzung des Vorschubtellers innerhalb des Hohlraums in Richtung Ausgabeöffnung und zur Überführung der Dübelmasse aus dem Hohlraum in das Bohrloch herbeigeführt. Hierfür kann der Kolben vorzugsweise an seiner hinsichtlich des Vorschubtellers gegenüberliegenden Seite mit einer Angriffsfläche, wie beispielsweise einem Druckteller ausgestattet sein, auf den der Anwender vorzugsweise mittels einer Hand Druck ausüben kann. Durch die Abstütz- oder Lagermöglichkeit der Vorrichtung mit der Auflagefläche an dem Substrat führt eine ausreichende Krafteinwirkung auf den Kolben zu einem Versetzen des Kolbens mit dem Vorschubteller relativ zur Hülse, so dass der Vorschubteller die Dübelmasse in Richtung Ausgabeöffnung und aus dem Hohlraum in das Bohrloch überführt.

In einem weiteren Schritt, der vorzugsweise nach dem Einbringen der Dübelmasse in das Bohrloch eingeleitet wird, erfolgt eine Entfernung der Vorrichtung von dem Substrat, wobei diese Entfernung durch eine Initialbewegung der Vorrichtung im Wesentlichen parallel zur Substratebene eingeleitet wird, um ein Abscheren der Dübelmasse von Teilen der Vorrichtung, wie beispielsweise dem Vorschubteller zu ermöglichen.

Im Anschluss kann in einem weiteren Schritt beispielsweise die Oberfläche der Dübelmasse im Bohrloch geglättet werden und/oder der Struktur des umliegenden Bereichs des Substrats angepasst werden. Hierfür kann beispielsweise die Vorrichtung zum Einsatz kommen, wobei man insbesondere Teile des Auflageabschnittes nutzt, um die Dübelmasse zu glätten und/oder besagte Struktur nachzubilden. Hierfür kann die Vorrichtung darüber hinaus geeignete Abschnitte oder Werkzeugbereiche aufweisen, wie beispielsweise einen Glättbereich.

In einem weiteren Schritt ist es denkbar, ein Befestigungsmittel in die Dübelmasse einzubringen. In einer Ausgestaltung des Verfahrens wird die in dem Bohrloch befindliche Dübelmasse hierfür mit einer Öffnung versehen, um dem Befestigungsmittel eine Montagehilfe bereitzustellen. Diese Öffnung wird vorzugsweise im noch nicht vollständig ausgehärteten Zustand der Dübelmasse in selbige eingebracht. Hierfür kommt beispielsweise ein dornförmiges Werkzeug zum Einsatz, welches insbesondere an der Vorrichtung angeformt sein kann. Ferner kann es als Zusatzwerkzeug mit der Vorrichtung lösbar verbunden sein oder in der Verkaufsverpackung beiliegen. Vorzugsweise ist die Öffnung kleiner als das in die Dübelmasse einzubringende Befestigungsmittel. Eine Variante sieht vor, das Befestigungsmittel selbst in die noch nicht ausgehärtete Dübelmasse einzubringen, beispielsweise bei der Nutzung einer Schraube zum Schneiden eines Gewindes in die Dübelmasse. Vorzugsweise wird das Verbindungsmittel im Anschluss wieder entfernt, um die Dübelmasse vollständig auszuhärten. In beiden Fällen erfolgt demnach vorzugsweise erst nach vollständiger Aushärtung der Dübelmasse das finale Einbringen des Verbindungsmittels. Eine weitere Variante sieht ein vollständiges Aushärten der Dübelmasse vor, wobei im Anschluss eine Öffnung in die Dübelmasse eingebracht wird, was beispielsweise durch Bohren erfolgen kann. Im Anschluss kann ein Verbindungsmittel in die Öffnung eingebracht werden oder optional in einem vorhergehenden Schritt ein Gewinde in die Dübelmasse geschnitten werden.

Im Folgenden wird eine bevorzugte Ausführungsform anhand von Figuren beschrieben. Dabei zeigen
Figur 1 eine perspektivische Ansicht einer erfindungsgemäßen Vorrichtung,
Figur 2 eine Unteransicht der Vorrichtung aus Figur 1,
Figur 3 eine geschnittene Seitenansicht der Vorrichtung aus Figur 1 mit einer Dübelmasse aufgesetzt auf ein Substrat,
Figur 4 eine Detailansicht der Vorrichtung aus Figur 3,
Figur 5 eine geschnittene Seitenansicht der Vorrichtung aus Figur 3 während des Einbringens der Dübelmasse in ein Bohrloch und
Figur 6 eine geschnittene Seitenansicht der Vorrichtung aus Figur 3 nach dem Einbringen der Dübelmasse in ein Bohrloch.

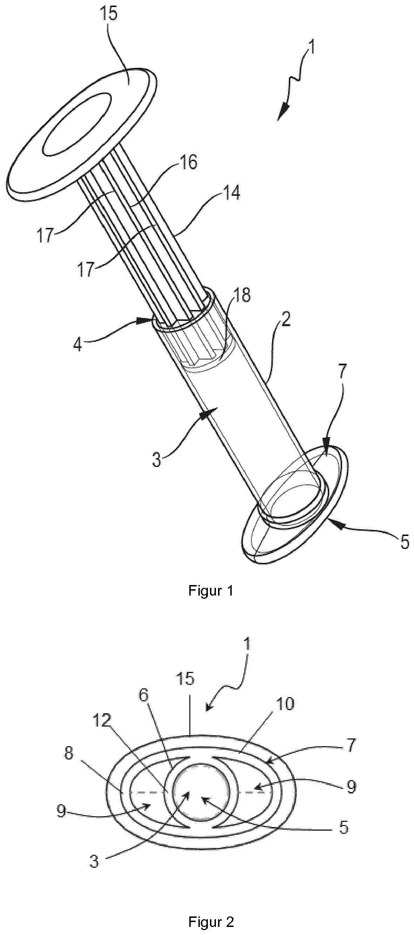

Figur 1 zeigt eine perspektivische Ansicht einer erfindungsgemäßen Vorrichtung 1 zum Einbringen einer in Figur 1 nicht gezeigten Dübelmasse in ein Bohrloch aufweisend eine Hülse 3, die einen Hohlraum 3 zur Aufnahme der Dübelmasse umgibt. Die Hülse 2 ist dabei weitestgehend hohlzylindrisch gestaltet wobei der Hohlraum 3 eine im Wesentlichen zylindrisch Grundform aufweist. An der distalen Vorderseite weist die Hülse 2 eine mit dem Hohlraum 3 korrespondierende Ausgabeöffnung 5 zur Ausgabe der Dübelmasse auf, wobei der Querschnitt der Ausgabeöffnung 5 dem Querschnitt des Hohlraums 3 entspricht. Im Bereich der Ausgabeöffnung 5 ist ferner an die Außenseite der Hülse 2 ein Auflageabschnitt 7 angeformt zur Bereitstellung einer Auflagemöglichkeit für die Hülse 3 beim Einbringen der Dübelmasse. Hülse 2 und Auflageabschnitt 7 sind aus demselben Kunststoffmaterial gefertigt und in einem Spritzgussverfahren hergestellt worden. Im vorliegenden Ausführungsbeispiel ist ein transparentes Kunststoffmaterial zum Einsatz, einerseits, um den Hohlraum 3 einsehen zu können, andererseits, um im Anwendungsfall durch den Auflageabschnitt 7 sehen zu könne, um eine sichere Positionierung der Vorrichtung 1 ermöglichen zu können.

Ferner ist an der hinsichtlich der Ausgabeöffnung 5 gegenüberliegenden, proximalen Seite der Hülse 2 eine obere Öffnung 4 vorgesehen durch die ein Stempel 14 beinhaltend einen Kolben 16 mit einem in distale Richtung weisenden Vorschubteller 18 in den Hohlraum 3 hineinragt. An der proximalen Seite weist der Stempel 14 einen flächigen, oval gestalteten Druckteller 15, der im Wesentlichen orthogonal zum Kolben 16 angeordnet ist, mit dem der Anwender durch Druck- oder Zugeinwirkung den Kolben 16 relativ zur Hülse 3 derart bewegbar ist, dass der Vorschubteller 18 im Hohlraum 3 in Richtung der Ausgabeöffnung 5 oder entgegengesetzt versetzbar ist, um die Dübelmasse beispielsweise aufnehmen oder abgeben zu können. Der Stempel 14 ist ebenfalls aus einem Kunststoffmaterial gefertigt, wobei der Kolben nicht aus Vollmaterial besteht, sondern viele sich in Längsrichtung des Kolbens erstreckende, parallel zueinander verlaufende Rippen 17 aufweist.

Figur 2 zeigt eine Unteransicht der Vorrichtung 1 aus Figur 1. Dabei ist die kreisförmige Ausgabeöffnung 5 zu erkennen, die in einen Zugang an der distalen Seite der Vorrichtung 1 zum zylindrischen Hohlraum 5 ermöglicht. Die Ausgabeöffnung 5 ist durch einen Öffnungsrand 6 begrenzt, der durch den in distale Richtung vorstehenden Abschnitt der Hülse 2 gebildet wird, wobei hier eine Stirnfläche 12 vorgesehen ist.

Der vorstehende Auflagebereich 7 ist oval gestaltet und steht seitlich von der Hülse 2 hervor. Eine Abstütz- oder Lagermöglichkeit für die Vorrichtung 1 wird hierbei durch einen um die Hülse umlaufenden Auflagerand 8 bereitgestellt, der der ovalen Grundform des Auflagebereichs 7 folgt, den Außenrand des Auflagebereichs 7 bildet und in distale Richtung vorsteht sowie dort mit einer Auflagefläche 10 endet. Sowohl Auflagefläche 10 als auch Stirnfläche 12 liegen dabei in einer Ebene. Zudem sind Auflagerand 8 und Öffnungsrand 6 derart gestaltet, dass an der Schmalseite des Ovals des Auflagebereichs 7 Auflagerand 8 und Öffnungsrand 6 derart in Kontakt treten, dass Auflagefläche 10 und Stirnfläche 12 ineinander übergehen. An der Breitseite des Ovals wieder sind Auflagerand 10 und Öffnungsrand 6 derart beabstandet voneinander, dass zwischen Auflagefläche 8 und Stirnfläche 12 an beiden Seiten ein Freiraum 9 vorgesehen ist, der wie die oberhalb beschriebenen Vorteile erwirken kann. Ferner ist in Figur 1 der ovale Druckteller 15 zu sehen, der den Auflagebereich 7 im gezeigten Ausführungsbeispiel und in der gezeigten Ansicht seitlich überragt.

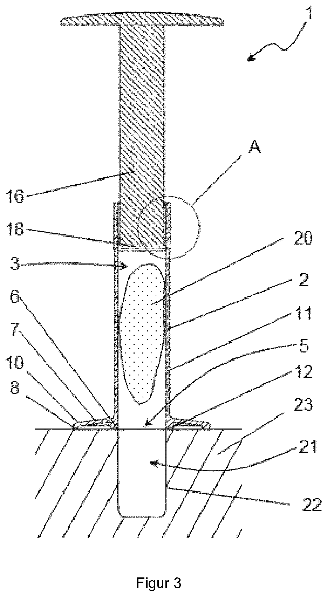

Figur 3 zeigt eine geschnittene Seitenansicht der Vorrichtung 1 aus Figur 1 mit einer Dübelmasse 20 innerhalb des Hohlraums 3 aufgesetzt auf ein Substrat, im vorliegenden Fall eine Wand 23 aus Mauerwerk, in die ein Bohrloch 21 eingebracht worden ist. Der Anwender hat die Komponenten der zweikomponentigen Dübelmasse 20 auf Epoxidharz-Basis in einem nicht abgebildeten Verfahrensschritt durch manuelles Kneten miteinander vermischt. In der gezeigten Position ist, sofern er sich nicht ohnehin in der gezeigten Position befand, der Kolben 16 mit dem daran angeformten Vorschubteller 18 in proximale Richtung versetzt worden, um Raum zur Aufnahme der Dübelmasse 20 bereitzustellen. Daraufhin hat der Anwender die Dübelmasse 20 zu einer geeigneten Form verformt und in den Hohlraum 3 der Hülse 2 eingebracht. In der gezeigten Figur hat der Anwender die Vorrichtung 1 bereits oberhalb des Bohrloches 21 platziert, wobei die Auflagefläche 8 des Auflagerandes 10 auf der Außenseite der Wand 23 aufliegt und wobei die Ausgabeöffnung 5 über dem Bohrloch 21 angeordnet ist. Dabei liegt der Öffnungsrand 6 mit der Stirnfläche 12 noch auf der Außenseite der Wandung 23 auf. Im gezeigten Ausführungsbeispiel entspricht der Durchmesser des Bohrloches 21 in etwa dem Durchmesser der Ausgabeöffnung 5 und somit auch des Hohlraumes 3, so dass eine das Bohrloch 21 begrenzende Bohrlochwandung 22 in etwa mit der Innenwand 11 des Hohlraumes 3 fluchtet. Mit einer derartigen Konstellation ist eine besonders einfache Einbringung der Dübelmasse 20 möglich. Selbstverständlich sind auch Durchmesser- und Formunterschiede denkbar. Vorzugsweise ist jedoch das Bohrloch 21 größer als die Ausgabeöffnung 5 und/oder der Querschnitt des Hohlraumes 3.

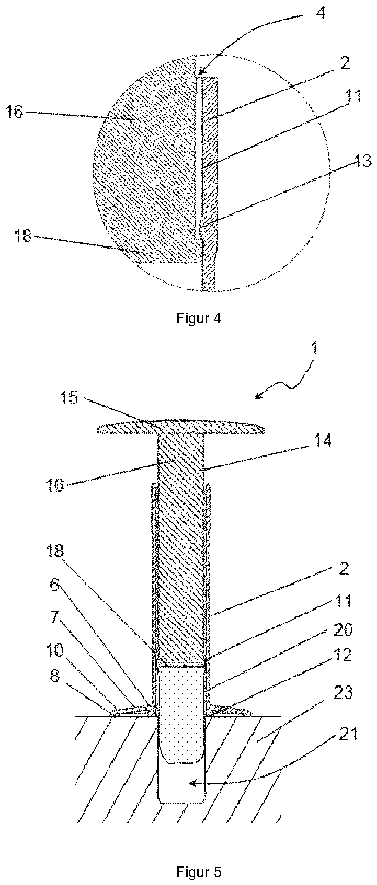

Figur 4 zeigt ein Detail A der Vorrichtung 1 aus Figur 3, wobei hier der distale Abschnitt des Kolbens 16 mit dem angeformten Vorschubteller 18 zu erkennen ist. Der Vorschubteller 18 weist dabei einen radial vom Außenbereich des Kolbens 16 vorstehenden Kragen auf, der umlaufend mit der Innenwand 11 der Hülse 2 in Kontakt ist. Wie oberhalb beschrieben ist der Kolben 16 in proximale Richtung, also in Richtung oberer Öffnung 4 versetzt dargestellt. Um ein weiteres Herausziehen des Kolbens 16 aus der Hülse 2 zu unterbinden, weist die Hülse 2 an ihrer Innenwand 11 einen vorstehenden Vorsprung 13 auf, der als Anschlag für den vorstehenden Kragen des Vorschubtellers 18 dient. Dieser Vorsprung 13 ist umlaufend über die gesamte Innenwand 11 der Hülse 2 vorgesehen.

Figur 5 zeigt eine geschnittene Seitenansicht der Vorrichtung 1 aus Figur 3 während des Einbringens der Dübelmasse 20 in ein Bohrloch 21. Hier für übt der Anwender Druck auf den Druckteller 15 in Richtung der Wand 23 oder in Richtung Ausgabeöffnung 5 aus, so dass der Kolben 16 mit dem Vorschubteller 18 relativ zur Hülse 2 versetzt wird, wobei der Vorschubteller 18 durch seine Versetzung innerhalb des Hohlraumes 3 bewegt wird und die Dübelmasse 20 aus dem Hohlraum 3 in das Bohrloch 21 drückt. Da der Vorschubteller 18 mit seinem vorstehenden Kragen 18 während des Versetzens innerhalb des Hohlraumes 3 mit der Innenwand 11 der Hülse 2 in Kontakt ist, schabt oder schert er etwaige an der Innenwand 11 anhaftende Dübelmasse 20 von selbiger ab, so dass keine Rückstände innerhalb des Hohlraumes verbleiben.

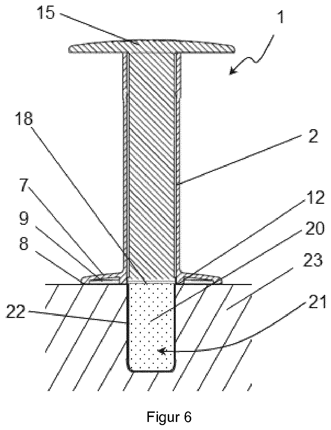

Figur 6 zeigt eine geschnittene Seitenansicht der Vorrichtung aus Figur 3 nach dem Einbringen der Dübelmasse 21 in ein Bohrloch. Das gesamte Bohrloch 21 ist vorzugsweise mit Dübelmasse 20 ausgefüllt und durch Druckeinwirkung auf die Stempelplatte konnte der Anwender die Dübelmasse 20 ferner mit der Bohrlochwandung 22 in Kontakt bringen. In der gezeigten Endposition befindet sich die in distale Richtung weisende Oberfläche des Vorschubtellers 18 vorzugsweise in einer Ebene mit der Stirnfläche 12, um ein einfaches Entfernen der Vorrichtung 1 von der Wand 23 ermöglichen zu können. Die Entfernung erfolgt vorzugsweise eingeleitet durch eine Initialbewegung in seitliche Richtung, also im Wesentlichen parallel zur Außenseite der Wand 23, um ein Abscheren der Dübelmasse 20 von der in distale Richtung weisenden Oberfläche des Vorschubtellers 18 zu ermöglichen. Sollte ein Rest an Dübelmasse 20 beispielsweise an dem Vorschubteller 18 oder der Stirnfläche 12 verbleiben, kann dieser Rest beispielsweise vom Auflagerand 8 bei besagter Abscherbewegung in den Freiraum 9 transportiert werden, ohne die Umgebung zu verschmutzen.

Nach dem Entfernen wird die Oberfläche der Dübelmasse 20 im Bohrloch 21 geglättet und/oder der Struktur der Außenseite der Wand 23 angepasst. Hierfür kann beispielsweise der Auflagerand 8 oder der Druckteller 15 zum Einsatz kommen. Anschließend kann wie oberhalb beschrieben ein Verbindungsmittel, wie beispielsweise eine Holzschraube in die vorzugsweise teilweise ausgehärtete Dübelmasse 20 eingebracht werden.

**Bezugszeichenliste**

| | | | |
|---|---|---|---|
| 1 | Vorrichtung | 15 | Druckteller |
| 2 | Hülse | 16 | Kolben |
| 3 | Hohlraum | 17 | Rippen |
| 4 | Obere Öffnung | 18 | Vorschubteller |
| 5 | Ausgabeöffnung | 19 | Kragen |
| 6 | Öffnungsrand | 20 | Dübelmasse |
| 7 | Auflageabschnitt | 21 | Bohrloch |
| 8 | Auflagefläche | 22 | Bohrlochwandung |
| 9 | Freiraum | 23 | Wand |
| 10 | Auflagerand | | |
| 11 | Innenwand | | |
| 12 | Stirnfläche | | |
| 13 | Vorsprung | | |
| 14 | Stempel | | |

## Patentansprüche

1. Vorrichtung (1) zum Einbringen einer Dübelmasse (20) in ein Bohrloch (21) aufweisend eine Hülse (3) mit einem Hohlraum (3) zur Aufnahme der Dübelmasse (20), wobei die Hülse (2) an der einen Seite eine mit dem Hohlraum (3) korrespondierende Ausgabeöffnung (5) zur Ausgabe der Dübelmasse (20) sowie einen seitlich von der Hülse (2) vorstehenden Auflageabschnitt (7) zur Bereitstellung einer Auflagemöglichkeit für die Hülse (2) beim Einbringen der Dübelmasse (20) aufweist, wobei an der gegenüberliegenden Seite der Hülse (2) eine obere Öffnung (4) vorgesehen ist, durch die ein Kolben (16) mit einem Vorschubteller (18) in den Hohlraum (3) hineinragt, wobei der Kolben (16) relativ zur Hülse (2) derart bewegbar ist, dass der Vorschubteller (18) im Hohlraum (3) versetzbar ist, um die Dübelmasse (20) beispielsweise aufnehmen und abgeben zu können und wobei der Auflageabschnitt (7) eine Auflagefläche (8) aufweist, wobei die Auflagefläche (8) und eine die Ausgabeöffnung (5) begrenzende Stirnfläche (12) in einer Ebene liegen und wobei die Hülse (2) ein Rückhaltemittel (13) für den Kolben (16) aufweist, um eine Möglichkeit zur Begrenzung der Relativbewegung von Kolben (16) zur Hülse (2) bereitzustellen.

2. Vorrichtung (1) nach Anspruch 1, **dadurch gekennzeichnet, dass** der Hohlraum (1) zumindest im Bereich, in dem der Vorschubteller (18) im Hohlraum (3) versetzbar ist, zylindrisch gestaltet ist.

3. Vorrichtung nach einem der Ansprüche 1 oder 2, **dadurch gekennzeichnet, dass** die Ausgabeöffnung (5) mit einer den Hohlraum (3) begrenzenden Innenwand (11) fluchtet.

4. Vorrichtung (1) nach einem der vorhergehenden Ansprüche, **dadurch gekennzeichnet, dass** der Kolben (16) relativ zur Hülse (2) beidseitig bewegbar, um die Dübelmasse (20) in den Hohlraum (3) aufnehmen und zum Einbringen in ein Bohrloch (21) abgeben zu können.

5. Vorrichtung (1) nach einem der vorhergehenden Ansprüche, **dadurch gekennzeichnet, dass** der Auflageabschnitt (7) die Auflagefläche (8) aufweist, wobei zwischen der Auflagefläche (8) und der die Ausgabeöffnung (5) begrenzenden Stirnfläche (12) ein Freiraum (9) vorgesehen ist.

6. Vorrichtung (1) nach einem der vorhergehenden Ansprüche, **dadurch gekennzeichnet, dass** die Auflagefläche (8) an einem umlaufenden Auflagerand (10) vorgesehen ist und dass die Stirnfläche (12) an dem Öffnungsrand (6) vorgesehen sind, wobei Auflagerand (10) und Öffnungsrand (6) derart beabstandet voneinander sind, dass zwischen Auflagefläche (8) und Stirnfläche (12) zumindest bereichsweise ein Freiraum (9) vorgesehen ist.

7. Vorrichtung (1) nach einem der vorhergehenden Ansprüche, **dadurch gekennzeichnet, dass** das Rückhaltemittel als von der Innenwand (11) der Hülse (2) vorstehender Vorsprung (13) ausgestaltet ist.

8. Verfahren zum Einbringen einer Dübelmasse (20) in ein Bohrloch (21) unter Verwendung einer Vorrichtung (1) nach einem der Ansprüche 1 bis 7, **gekennzeichnet durch** die Schritte
- Einbringen der Dübelmasse (20) in den Hohlraum (3) der Hülse (2);
- Aufsetzen der Vorrichtung (1) mit der Auflagefläche (8) auf ein Substrat (23) derart, dass die Ausgabeöffnung (5) über dem Bohrloch (21) angeordnet ist;
- Herbeiführung einer Relativbewegung von Kolben (16) zu Hülse (2) zur Versetzung des Vorschubtellers (18) innerhalb des Hohlraums (3) in Richtung Ausgabeöffnung (5) und zur Überführung der Dübelmasse (20) aus dem Hohlraum (3) in das Bohrloch (21);
- Entfernen der Vorrichtung (1) von dem Substrat (23) eingeleitet durch eine Initialbewegung im Wesentlichen parallel zur Substratebene, um ein Abscheren der Dübelmasse (20) vom Vorschubteller (18) zu ermöglichen.

9. Verfahren zum Einbringen einer mehrkomponentigen Dübelmasse (20) in ein Bohrloch (21) unter Verwendung einer Vorrichtung (1) zum Einbringen einer Dübelmasse (20) in ein Bohrloch (21) aufweisend eine Hülse (2) mit einem Hohlraum (3) zur Aufnahme der Dübelmasse (20), wobei die Hülse (2) an der einen Seite eine mit dem Hohlraum (3) korrespondierende Ausgabeöffnung (5) zur Ausgabe der Dübelmasse (20) sowie einen seitlich von der Hülse (2) vorstehenden Auflageabschnitt (7) zur Bereitstellung einer Auflagemöglichkeit für die Hülse (2) beim Einbringen der Dübelmasse (20) aufweist, wobei an der gegenüberliegenden Seite der Hülse (2) eine obere Öffnung (4) vorgesehen ist, durch die ein Kolben (16) mit einem Vorschubteller (18) in den Hohlraum (3) hineinragt, wobei der Kolben (16) relativ zur Hülse (2) derart bewegbar ist, dass der Vorschubteller (18) im Hohlraum (3) versetzbar ist, um die Dübelmasse (20) beispielsweise aufnehmen und abgeben zu können, **gekennzeichnet durch** die Schritte
- Vermischen der Komponenten einer mehrkomponentigen Dübelmasse (20) zur Bereitstellung einer mehrkomponentigen Dübelmasse (20),
- Einbringen der mehrkomponentigen Dübelmasse (20) in den Hohlraum (3) der Hülse (2);
- Aufsetzen der Vorrichtung (1) mit der Auflagefläche (8) auf ein Substrat (23) derart, dass die Ausgabeöffnung (5) über dem Bohrloch (21) angeordnet ist;
- Herbeiführung einer Relativbewegung von Kolben (16) zu Hülse (2) zu Versetzung des Vorschubtellers (18) innerhalb des Hohlraums (3) in Richtung Ausgabeöffnung (5) und zur Überführung der Dübelmasse (20) aus dem Hohlraum (3) in das Bohrloch (21);
- Entfernen der Vorrichtung (1) von dem Substrat (23) eingeleitet durch eine Initialbewegung im Wesentlichen parallel zur Substratebene, um ein Abscheren der Dübelmasse (20) vom Vorschubteller (18) zu ermöglichen.

## Claims

1. A device (1) for introducing a plugging compound (20) into a borehole (21), the device comprising a sleeve (3) having a cavity (3) for receiving the plugging compound (20), wherein the sleeve (2) has, on one end, a discharge opening (5) corresponding to the cavity (3) for the discharge of the plugging compound (20) and a support portion (7) projecting laterally from the sleeve (2) for providing a support option for the sleeve (2) when the plugging compound (20) is introduced, wherein an upper opening (4) is provided on the opposite end of the sleeve (2), through which opening a piston (16) having a feed plate (18) protrudes into the cavity (3), wherein the piston (16) is movable relative to the sleeve (2) such that the feed plate (18) can be displaced in the cavity (3) in order, for example, to be able to receive and discharge the plugging compound (20) and wherein the support portion (7) has a support surface (8), wherein the support surface (8) and an end face (12) delimiting the discharge opening (5) lie in one plane and wherein the sleeve (2) has a retaining means (13) for the piston (16) in order to provide an option for limiting the relative movement of the piston (16) with respect to the sleeve (2).

2. The device (1) according to claim 1, **characterized in that** the cavity (1) is cylindrical at least in the region in which the feed plate (18) is displaceable in the cavity (3).

3. The device according to one of claims 1 or 2, **characterized in that** the discharge opening (5) is aligned with an inner wall (11) that delimits the cavity (3).

4. The device (1) according to one of the preceding claims, **characterized in that** the piston (16) is movable relative to the sleeve (2) at both ends in order to receive the plugging compound (20) in the cavity (3) and to be able to discharge said plugging compound for insertion into a borehole (21).

5. The device (1) according to one of the preceding claims, **characterized in that** the support portion (7) has the support surface (8), a space (9) being provided between the support surface (8) and the end face (12) delimiting the discharge opening (5).

6. The device (1) according to one of the preceding claims, **characterized in that** the support surface (8) is provided on a circumferential support edge (10) and **in that** the end face (12) is provided on the opening edge (6), the support edge (10) and the opening edge (6) being spaced apart from one another such that a space (9) is provided between the support surface (8) and the end face (12) at least in regions.

7. The device (1) according to one of the preceding claims, **characterized in that** the retaining means is designed as a projection (13) projecting from the inner wall (11) of the sleeve (2).

8. A method for introducing a plugging compound (20) into a borehole (21) using a device (1) according to one of claims 1 to 7, **characterized by** the steps of
- introducing the plugging compound (20) into the cavity (3) of the sleeve (2);
- placing the support surface (8) of the device (1) on a substrate (23) such that the discharge opening (5) is arranged above the borehole (21);
- bringing about a relative movement of the piston (16) with respect to the sleeve (2) in order to displace the feed plate (18) within the cavity (3) in the direction of the discharge opening (5) and in order to transfer the plugging compound (20) from the cavity (3) into the borehole (21);
- removing the device (1) from the substrate (23), initiated by an initial movement substantially in parallel with the substrate plane in order to make it possible to shear the plugging compound (20) off the feed plate (18).

9. A method for introducing a multi-component plugging compound (20) into a borehole (21) using a device (1) for introducing a plugging compound (20) into a borehole (21), the device comprising a sleeve (2) having a cavity (3) for receiving the plugging compound (20), the sleeve (2) having, on one end, a discharge opening (5) corresponding to the cavity (3) for the discharge of the plugging compound (20) and a support portion (7) projecting laterally from the sleeve (2) for providing a support option for the sleeve (2) when the plugging compound (20) is introduced, an upper opening (4) being provided on the opposite end of the sleeve (2), through which opening a piston (16) having a feed plate (18) protrudes into the cavity (3), the piston (16) being movable relative to the sleeve (2) such that the feed plate (18) can be displaced in the cavity (3) in order, for example, to be able to receive and discharge the plugging compound (20), **characterized by** the steps of
- mixing the components of a multi-component plugging compound (20) in order to provide a multi-component plugging compound (20),
- introducing the multi-component plugging compound (20) into the cavity (3) of the sleeve (2);
- placing the support surface (8) of the device (1) on a substrate (23) such that the discharge opening (5) is arranged above the borehole (21);
- bringing about a relative movement of the piston (16) with respect to the sleeve (2) in order to displace the feed plate (18) within the cavity (3) in the direction of the discharge opening (5) and in order to transfer the plugging compound (20) from the cavity (3) into the borehole (21);
- removing the device (1) from the substrate (23), initiated by an initial movement substantially in parallel with the substrate plane in order to make it possible to shear the plugging compound (20) off the feed plate (18).

## Revendications

1. Dispositif (1) servant à l'introduction d'une matière de fixation (20) dans un trou de forage (21) comportant une douille (3) munie d'une cavité (3) servant à recevoir la matière de fixation (20), dans lequel la douille (2) comporte, sur un côté, une ouverture de distribution (5) correspondant à la cavité (3) et servant à la distribution de la matière de fixation (20) ainsi qu'une section d'appui (7) dépassant latéralement de la douille (2) et offrant un moyen d'appui pour la douille (2) lors de l'introduction de la matière de fixation (20), dans lequel, sur le côté opposé de la douille (2), est ménagée une ouverture supérieure (4) par laquelle un piston (16) muni d'un rebord poussoir (18) pénètre dans la cavité (3), dans lequel le piston (16) peut être déplacé par rapport à la douille (2) de telle manière que le rebord poussoir (18) peut être décalé dans la cavité (3) afin de pouvoir, par exemple, recevoir et distribuer la matière de fixation (20), et dans lequel la section d'appui (7) comporte une surface d'appui (8), dans lequel la surface d'appui (8) et une surface frontale (12) définissant l'ouverture de distribution (5) se trouvent dans un plan, et dans lequel la douille (2) comporte un moyen de retenue (13) pour le piston (16) afin de permettre de limiter le mouvement relatif du piston (16) par rapport à la douille (2).

2. Dispositif (1) selon la revendication 1, **caractérisé en ce que** la cavité (1) est cylindrique au moins dans la zone dans laquelle le rebord poussoir (18) peut être décalé dans la cavité (3).

3. Dispositif selon l'une des revendications 1 ou 2, **caractérisé en ce que** l'ouverture de distribution (5) est alignée avec une paroi intérieure (11) définissant la cavité (3).

4. Dispositif (1) selon l'une des revendications précédentes, **caractérisé en ce que** le piston (16) peut être déplacé des deux côtés par rapport à la douille (2) afin de pouvoir recevoir la matière de fixation (20) dans la cavité (3) et de la distribuer pour son introduction dans un trou de forage (21).

5. Dispositif (1) selon l'une des revendications précédentes, **caractérisé en ce que** la section d'appui (7) comporte la surface d'appui (8), dans lequel un espace libre (9) est ménagé entre la surface d'appui (8) et la surface frontale (12) définissant l'ouverture de distribution (5).

6. Dispositif (1) selon l'une des revendications précédentes, **caractérisé en ce que** la surface d'appui (8) est ménagée sur un bord d'appui périphérique (10), et **en ce que** la surface frontale (12) est ménagée sur le bord d'ouverture (6), dans lequel le bord d'appui (10) et le bord d'ouverture (6) sont espacés l'un de l'autre de telle manière qu'un espace libre (9) est ménagé entre la surface d'appui (8) et la surface frontale (12) au moins dans certaines zones.

7. Dispositif (1) selon l'une des revendications précédentes, **caractérisé en ce que** le moyen de retenue est réalisé sous la forme d'une saillie (13) dépassant de la paroi intérieure (11) de la douille (2).

8. Procédé d'introduction d'une matière de fixation (20) dans un trou de forage (21) à l'aide d'un dispositif (1) selon l'une des revendications 1 à 7, **caractérisé par** les étapes
- d'introduction de la matière de fixation (20) dans la cavité (3) de la douille (2) ;
- de mise en place du dispositif (1) muni de la surface d'appui (8) sur un substrat (23) de telle manière que l'ouverture de distribution (5) est disposée au-dessus du trou de forage (21) ;
- de déclenchement d'un mouvement relatif du piston (16) par rapport à la douille (2) pour décaler le rebord poussoir (18) à l'intérieur de la cavité (3) en direction de l'ouverture de distribution (5) et pour transférer la matière de fixation (20) de la cavité (3) au trou de forage (21) ;
- de retrait du dispositif (1) du substrat (23) introduit par un mouvement initial sensiblement parallèle au plan du substrat, afin de permettre le cisaillement de la matière de fixation (20) du rebord poussoir (18).

9. Procédé d'introduction d'une matière de fixation (20) à plusieurs composants dans un trou de forage (21) à l'aide d'un dispositif (1) servant à l'introduction d'une matière de fixation (20) dans un trou de forage (21), comportant une douille (2) munie d'une cavité (3) servant à recevoir la matière de fixation (20), dans lequel la douille (2) comporte, sur un côté, une ouverture de distribution (5) correspondant à la cavité (3) et servant à la distribution de la matière de fixation (20), ainsi qu'une section d'appui (7) dépassant latéralement de la douille (2) et offrant un moyen d'appui pour la douille (2) lorsque la matière de fixation (20) est introduite, dans lequel, sur le côté opposé de la douille (2), est ménagée une ouverture supérieure (4) par laquelle un piston (16) muni d'un rebord poussoir (18) pénètre dans la cavité (3), dans lequel le piston (16) peut être déplacé par rapport à la douille (2) de telle manière que le rebord poussoir (18) peut être décalé dans la cavité (3) afin de pouvoir, par exemple, recevoir et distribuer la matière de fixation (20), **caractérisé par** les étapes
- de mélange des composants d'une matière de fixation (20) à plusieurs composants pour obtenir une matière de fixation (20) à plusieurs composants,
- d'introduction de la matière de fixation (20) à plusieurs composants dans la cavité (3) de la douille (2) ;
- de mise en place du dispositif (1) muni de la surface d'appui (8) sur un substrat (23) de telle manière que l'ouverture de distribution (5) est disposée au-dessus du trou de forage (21) ;
- de déclenchement d'un mouvement relatif du piston (16) par rapport à la douille (2) pour décaler le rebord poussoir (18) à l'intérieur de la cavité (3) en direction de l'ouverture de distribution (5) et pour transférer la matière de fixation (20) de la cavité (3) au trou de forage (21) ;
- de retrait du dispositif (1) du substrat (23) introduit par un mouvement initial sensiblement parallèle au plan du substrat, afin de permettre le cisaillement de la matière de fixation (20) du rebord poussoir (18).
